# EUROPEAN PATENT SPECIFICATION

(11) **EP 4 537 068 B1**
(45) Date of publication and mention of the grant of the patent: **27.05.2026**
(21) Application number: 23734749.7
(22) Date of filing: 07.06.2023
(51) Int. Cl.: G01M 3/38, B67B 3/00

(54) **APPARATUS AND METHOD FOR TESTING THE TIGHTNESS OF CONTAINERS CLOSED BY RESPECTIVE MEMBRANES**
VORRICHTUNG UND VERFAHREN ZUR DICHTHEITSPRÜFUNG VON ANHAND JEWEILIGEN MEMBRANEN VERSCHLOSSENEN BEHÄLTERN
APPAREIL ET PROCÉDÉ DE TEST D'ÉTANCHÉITÉ DE RÉCIPIENTS FERMÉS PAR DES MEMBRANES RESPECTIVES

(30) Priority: 10.06.2022 IT 202200012311
(43) Date of publication of application: 16.04.2025
(73) Proprietor: G.D S.p.A., 40133 Bologna (BO) (IT)
(72) Inventor: DE MARIA, Claudia, 40133 Bologna (BO) (IT); BERTUZZI, Ivanoe, 40133 Bologna (BO) (IT); GHINI, Marco, 40133 Bologna (BO) (IT); CAVAZZA, Luca, 40133 Bologna (IT); SINIGARDI, Stefano, 40133 Bologna (BO) (IT); BIONDI, Andrea, 40133 Bologna (IT)
(74) Representative: Fabris, Stefano
(86) International application number: PCT/IB2023/055860
(87) International publication number: WO 2023/238050

(56) References cited:
- EP-B1- 2 755 006
- CN-A- 107 207 170
- US-A- 4 930 345
- US-A1- 2014 366 658

## Description

The present invention refers to an apparatus and to a method for testing the tightness of containers closed by respective membranes.

The Italian patent application No. 102022000012308 entitled "Method and apparatus for testing the tightness of a container closed by a membrane" was filed on 10 June 2022 by the same Applicant.

The present invention finds a preferred, although not exclusive, application in the field of the production of loose containers such as yoghurt pots, dessert pots, cups for pre-cooked foods, capsules of brewing products, for example coffee, the latter being a sector to which reference may subsequently be made without losing generality.

In the present context, the term "capsule" is therefore intended to refer to the product formed by the container provided with the closing membrane.

Typically, the containers pertaining to this technical field are products having the shape of a glass-like element, substantially inverted conical-truncated, or of equivalent shape, with the widest portion upwards where the opening of the container is provided, and typically made of polymeric materials.

In the process of making the capsules, after the step of filling the container, in which the brewing product is introduced into the container through the opening, the sealing of the container is carried out by applying a membrane, with the function of a closing lid, having a laminar structure, which is fixed to an edge of the container delimiting said opening.

With the sealing, typically performed by welding or gluing or by means of an operation that includes both, an airtight closure of the container is obtained that allows the content of the capsule, and the inert protective atmosphere that may be inserted inside it, to remain permanently separated from the external atmosphere, at least until the removal or the perforation of the closing membrane, i.e. the perforation of the container if provided during the use of the capsule.

In this description as well as in the accompanying claims, some terms and expressions are deemed to have, unless otherwise expressly indicated, the meaning expressed in the following definitions. The term "membrane" means a body with a thin-thickness sheet structure, intended to close an opening and susceptible to deformation as a result of variations in the internal or external pressure upon opening and that is acting on it.

By "deformation of the membrane" is meant a variation of the shape of the membrane, wherein at least a part thereof is spaced from a reference plane of the container, for example the plane defined by an edge of the container to which the membrane is attached, and said distance, orthogonal to the reference plane, is at least a few millimetres.

A container is "tightly closed" when it is hermetically closed, i.e. without the possibility of any appreciable gas/air exchange between the inside and outside of the container itself.

In the capsule packaging processes, there is generally provided a step of testing the tightness of the container closed by the membrane, carried out after the step of filling and sealing the same. In fact, it is crucial to ensure the integrity of the tight closure of the capsule, in order to prevent contaminations or oxidation phenomena of the product contained in its inside or possible leaks of the content itself from the capsule. Defects that may compromise the airtight closure may for example originate from ruptures or tears of the container and/or of the closing membrane and/or from interruptions of the welding or gluing zone of the membrane to the container.

An example of a system for checking seals in a packaging plant is known from US 4930345. US 2014/366658 and CN 107207170 are also prior art to the present invention.

A known testing system provides for submitting the container to a deforming action by compression, for example by a localised squeezing, during a section of its handling path, along which an inspection station is located. A load sensor is provided in the inspection station and is positioned to come into contact with the membrane, during the transit of the container, so as to detect possible variations in the pressure inside the container acting on the membrane. These internal pressure variations, induced by the squeezing action, in fact tend to deform the membrane, for example by inducing a swelling of the membrane itself. Since the pressure inside the container varies in the presence of losses of tightness, by effect of the escape of the air from the container, based on the pressure variations detected by the inspection system, any losses of tightness can be recognized, in view of the possible reject of the container.

The Applicant could observe how the action of deforming the container is critical for the realization of an effective control system in detecting any losses of tightness in the container.

The Applicant has first of all found that, since a plurality of containers is typically handled along the production line, for example arranged in a single or multiple row configuration, the action of deforming the containers should be exerted simultaneously on several containers, in order to make the step of testing the tightness compatible with the handling times and the speeds of the containers imposed by the production cycles, typically designed for high production capacities.

The Applicant could also observe that both the extent and the duration of the deforming action exerted on each container are relevant factors for the system for testing the tightness. On the one hand, in fact, the force with which the deformation is applied, which must not be destructive of the container, is proportionally related to the increase in the internal pressure, if referred to a tightly closed container, and this internal pressure is responsible for the deformation of the membrane. On the other hand, the time of application of the deforming force on the container, which must necessarily be compatible with the cycle times of the production line, is also a critical factor because it affects the amount of air that escapes from the container, in the presence of defects. In fact, the longer the application time of the deforming force, the greater the amount of air coming out of the opening that characterizes the defect, and consequently the smaller the sizes of the openings that can be detected. This factor therefore becomes decisive for the identification of losses of tightness related to the presence of openings having extremely reduced sizes.

The Applicant has understood that the recognition of the defects is all the more precise and reliable the more uniform the deforming force applied from container to container. He has also understood that, in order to reach such uniformity, it is advisable to avoid, as far as possible, that the containers, submitted to the deforming action, can influence each other, for example by preventing a container, by reacting to the deforming action, in particular in the presence of defects, from being able to influence the deforming force applied to other containers.

The Applicant has therefore perceived that a uniformity of the deforming forces applied to the plurality of containers submitted to the method for testing the tightness can be obtained by applying the deforming action on the containers substantially independently of each other.

The Applicant has finally found that setting up a deforming unit for deforming the containers comprising a plurality of deforming devices, in which each deforming device is individually associated with a single and respective container of the plurality of containers, can ensure the application of a deforming action as uniform as possible to all the containers of the plurality of containers submitted to the tightness testing, whereby a greater precision and reliability of result can be obtained in the recognition of the tightnesses classifiable as defective.

Therefore, in a first aspect thereof, the present invention is directed to an apparatus for testing the tightness of containers closed by respective membranes, membranes as defined in claim 1.

The apparatus comprises a deforming unit.

The deforming unit is configured to exert a deforming action on a plurality of said containers.

Thanks to this deforming action, the pressure level inside the container is increased when referred to a tightly closed container.

The apparatus comprises a detection unit for detecting the deformation of the membrane of each container submitted to the deforming action.

The deforming unit comprises a plurality of deforming devices.

Each deforming device is individually associated with a single and respective container of said plurality of containers to exert said deforming action.

In a second aspect thereof, the present invention is directed to a method for testing the tightness of containers closed by respective membranes as defined in claim 11.

The method comprises the step of providing a deforming unit including a plurality of deforming devices configured to exert a deforming action on a respective plurality of said containers.

The method comprises the step of setting up a detection unit for detecting the deformation of the membrane of each container submitted to the deforming action.

The method comprises the step of individually associating each deforming device with a single, respective container of said plurality of containers to exert said deforming action.

The method comprises the step of detecting the deformation of the membrane of each container submitted to the deforming action to test the tightness of the container.

Thanks to these characteristics, the deforming action can be applied on each of the containers, independently of each other, ensuring, with a suitable control of the deforming devices, uniformity of the deforming force applied to all the containers of the plurality of containers submitted to the tightness testing.

Moreover, thanks to the fact that each deforming device is individually associated with a single and respective container, the possible malfunction of one of the devices does not have repercussions on the other devices, thus ensuring the continuity of operation of the entire apparatus, without the need for interruptions of the production line.

In at least one of the aforementioned aspects, the present invention may further have at least one of the preferred features set forth below.

In a preferred embodiment, the apparatus further comprises a transport device for transporting said plurality of containers towards said detection unit.

Preferably, said plurality of deforming devices is mounted on the transport device.

Each deforming device comprises a pair of pressing elements, between which the respective container is to be positioned.

Preferably, said pressing elements are mounted in an articulated way on respective supports to be submitted to a displacement movement from and to an operating position. Preferably said pressing elements in the operating position exert the action of deforming the corresponding container. Preferably the displacement movement of said pressing elements from and to said operating position is an oscillation.

In a preferred embodiment, the apparatus comprises a device for controlling the displacement movement of each pressing element.

Preferably, said control device comprises a cam mechanism.

Preferably, said cam mechanism includes a respective cam-follower element. Preferably said cam-follower element is rotatably supported on each pressing element. Preferably said cam-follower element is superficially coupled with a cam profile, in particular common to the plurality of the deforming devices.

Thanks to this characteristic, the deforming force can be applied uniformly and in a controlled manner on each of the containers associated with the respective deforming devices.

Preferably the cam profile is mounted on a stationary frame supporting the transport device. Preferably the apparatus comprises a pair of cam profiles, respectively arranged at laterally opposite sides of the transport device with respect to a longitudinal extension direction of the transport device.

In this way, a constructive simplification is obtained in the control of the cam-follower elements, in that one cam profile of the pair of cam profiles is dedicated to the movement of the part of oscillated pressing elements in one direction of oscillation and the other opposite cam profile of the pair of profiles is dedicated to the movement of the remaining part of oscillated pressing elements in the other direction of oscillation.

Preferably the pressing element comprises a surface having a concave profile intended to contact superficially the container.

Thanks to this characteristic, the retaining stability of the container between the pair of pressing elements of the deforming device is improved.

In a preferred embodiment, the deforming devices are configured to exert the deforming action on the respective containers associated therewith while said containers are handled along a handling path.

In this way, the times required for the step of testing the tightness can be substantially taken up, at least in part, within the times required for the completion of the production cycle of the capsules. In a preferred embodiment, each pressing element of the pair of pressing elements associated with the respective container is configured to exert a deforming action including a respective squeezing, the two squeezing actions exerted by the pair of pressing elements being performed on the container, in a substantially simultaneous manner, on respective diametrically opposite sides of said container.

Preferably, said containers closed by a membrane are capsules containing powder for brewing beverages, more preferably coffee powder.

It should be specified that some steps of the method described above may be independent of the order of execution reported. In addition, some steps may be optional. In addition, some steps of the method may be performed repetitively, or they may be performed in series or in parallel with other steps of the method.

The features and advantages of the present solution will become clearer from the detailed description of an embodiment thereof shown, by way of non-limiting example, with reference to the appended drawings in which:

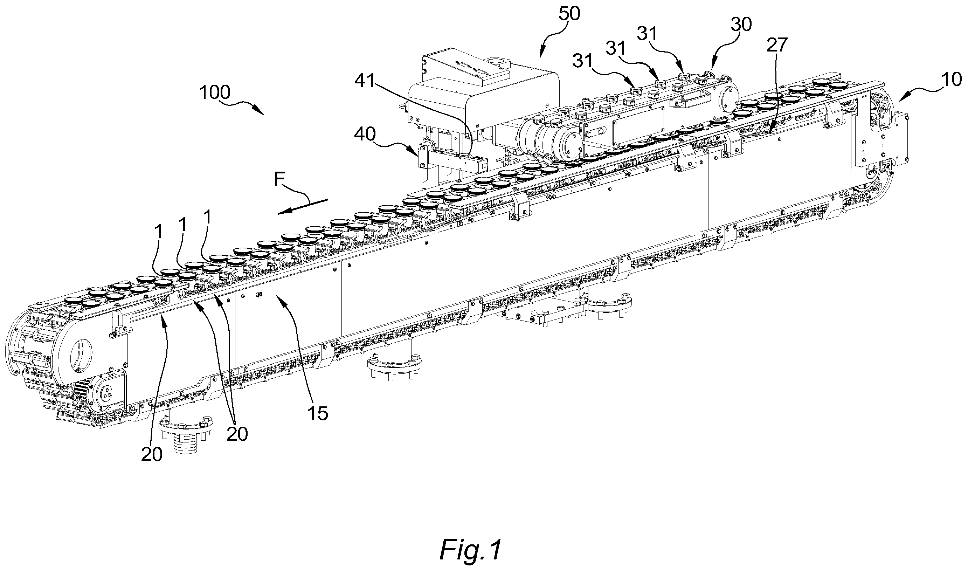

- Figure 1 is a schematic perspective view of an apparatus for testing the tightness of containers closed by a membrane, made in accordance with the present invention,
- Figure 2 is a schematic view in side elevation and in partial section of the apparatus of Figure 1,
- Figures 3 and 4 are schematic partial and enlarged scale views of a detail of the apparatus of the previous figures.

With reference to the cited figures, 100 overall indicates an apparatus for testing the tightness of containers 1 closed by a membrane 2, made in accordance with the present invention.

The containers 1, in this preferred embodiment, are configured to make capsules for brewing products, for example coffee powder, and are made for the purpose in the form of a conical-truncated glass having a cavity with a larger portion upwards where an opening 3 communicating with the cavity of the container 1 is provided. The loose product is introduced through the opening 3.

The container 1 is provided with an edge 4 delimiting the opening 3, made in the form of an annular crown, on which the closing membrane 2 is fixed, for example by gluing or welding or by means of an operation that includes both.

The fixing of the membrane 2 is made to obtain an airtight closure of the container 1 in order to allow the content of the capsule, and the inert protective atmosphere that may be inserted inside it, to remain permanently separated from the external atmosphere, preferably until the step of using the capsule.

The apparatus 100 comprises a transport device 10, shaped as a conveyor belt and configured to handle a plurality of containers 1, along a transport direction F, from an inlet zone in which they are placed on the conveyor belt by a feeding device (not depicted) as far as an outlet zone, in which the containers 1, having completed the step of testing the tightness, are picked up and taken to the subsequent processing steps of the capsule production cycle.

In this preferred example, the containers 1 are handled by the transport device 10 in two side-by-side rows, each row comprising a plurality of containers 1 aligned at a regular pitch along the transport direction F, in this example it is straight. The containers 1 are transported with the respective bottom, placed on the part vertically opposite to the membrane 2, resting on the transport device 10.

The apparatus 100 also comprises a deforming unit 15, configured to exert a deforming action on a plurality of containers 1, suitable for testing the tightness.

Said deforming unit 15 comprises a plurality of deforming devices, all indicated with 20, wherein each deforming device 20 is individually associated with a single and respective container 1, to exert the deforming action.

Each deforming device 20 is mounted on the transport device 10 and comprises a plurality of pairs of pressing elements 21, between which the respective container 1 remains positioned during its handling on the transport device 10.

The pressing elements 21 of each pair are mounted in an articulated way on respective supports 22 integral with a transport plane of the transport device 10. By means of the articulated mounting around a respective axis of oscillation, directed perpendicularly to the transport direction F, each pressing element 21 is oscillatable from and to an operating position in which it is displaced to exert a deforming action by localised squeezing of the container 1. More in particular, each container 1 is submitted to a squeezing action comprising two squeezing actions performed by the respective pressing elements 21, in a substantially simultaneous manner, on diametrically opposite sides of the container 1.

For controlling the oscillation movement of the pressing elements 21, a control device 25 comprising a cam mechanism including a cam-follower element 26 coupled with a cam profile 27 is provided.

The cam profile 27 is mounted on a stationary frame 28 supporting the transport device 10.

In greater detail, the cam-follower element 26 is made with a respective roller rotatably supported on the corresponding pressing element 21, around a rotation axis directed perpendicularly to the transport direction F, and the cam profile 27 is defined on a track extended longitudinally in the transport direction F, against which the cam-follower roller 26 is superficially coupled. In this way, by means of the appropriate conformation of the cam profile 27, for example including parallel sections inclined with respect to the transport direction F, the cam-follower roller 26 is displaced transversely with respect to the transport direction F, such movement generating, by providing a suitable lever arm between the articulation axes of the cam-follower roller 26 and of the pressing element 21, the oscillation of the pressing element 21 from and towards the operating position during the handling of the container 1 in the transport direction F.

In each container 1 submitted to the deforming action, the pair of pressing elements 21 is oscillated around the respective axes of oscillation with directions opposite to each other. By means of the oscillation towards the operating position, each pressing element 21 exerts a respective squeezing on the corresponding container 1, the two squeezing actions being exerted, in a substantially simultaneous manner, on respective diametrically opposite sides of the container 1.

21a indicates a surface having concave profile of the respective pressing element 21, which is intended to contact superficially the container 1.

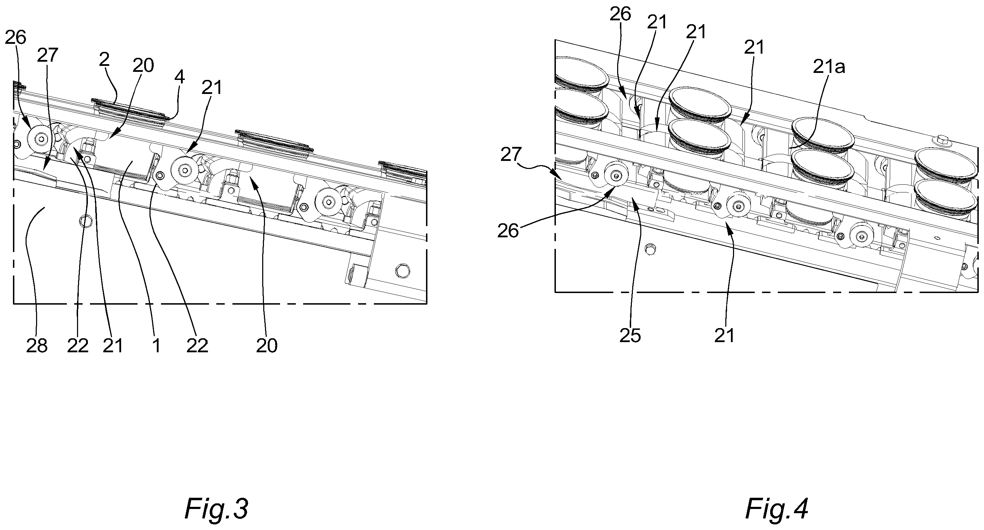

With reference to Figure 3, since in this preferred example the handling of two side-by-side rows of containers 1 is provided, the control of the pressing elements 21 is made in a constructively and functionally effective manner in the following manner.

Each pair of containers 1 comprises a first container and a second container which move side by side along the transport direction F and is submitted to the deforming action of a first pair of pressing elements 21 and a second pair of pressing elements 21.

The first pair of pressing elements 21 acts on the first container and the second pair of pressing elements 21 acts on the second container. The pressing element of the first pair of pressing elements 21 and the pressing element of the second pair of pressing elements 21, which are positioned on a same side of the pair of containers 1, so as to be mutually side by side, are oscillatable integrally with each other around a common axis of oscillation and the control of this oscillation takes place by means of a cam-follower roller 26 coupled to a track of the cam profile 27 positioned on one side of the transport device 10.

Similarly, the other pressing element 21 of the first pair of pressing elements 21 and the other pressing element 21 of the second pair of pressing elements 21, also mutually side by side, are oscillatable integrally with each other around a corresponding common axis of oscillation and the control of this oscillation takes place by means of a corresponding cam-follower roller 26 coupled to a second track of the cam profile 27 positioned on an opposite side of the transport device 10. In other words, on this opposite side of the transport device 10 the second track of the cam profile 27, on which the corresponding cam-follower roller 26 is coupled, is arranged specularly.

It should be however noted that based on this configuration, each pair of pressing elements 21 is configured to act on a single container 1.

Furthermore, each pair of containers 1 moving side by side along the transport direction F is submitted to the action of a corresponding pair of deforming devices 20, the control of which, made by means of the cam mechanism, is common to each other.

It should also be noted that, by means of the cam profile 27, common to all the deforming devices 20, it is possible to apply in each deforming device 20 the same movement of oscillation of the pressing elements 21 from and to the operating position, in which the deforming action of the corresponding container 1 is exerted, thus ensuring uniformity of the deforming forces applied to the containers 1.

30 indicates a device for handling a plurality of abutment elements 31, each of which is configured to exert an abutment action of the membrane 2 of the corresponding container 1, counteracting the deformation of the membrane 2 caused by the deforming action by squeezing exerted by the pressing elements 21.

The handling device 30 is placed in a position overlying the transport device 10 and is configured as a closed loop belt between a pair of return wheels 32 on which the abutting elements 31, aligned with regular pitch, are mounted in the movement direction parallel to the transport direction F. In the handling device 30 an active branch 30a is identified, between the return wheels 32, which is turned in a position facing the containers 1, with a predetermined spacing so that the abutting elements 31 can exert the action of abutting the membrane 2 in their transit along the active branch 30a.

Downstream of the handling device 30, with respect to the transport direction F, the apparatus comprises a detection unit 40 configured to detect at least one parameter related to the membrane profile 2, in particular when the abutting action exerted by said abutting element 31 has ceased. Conveniently, the detection unit 40 comprises at least one optical device 41 for contactlessly measuring the membrane 2.

An example of an optical device may comprise a photoelectric sensor, in particular a laser sensor of analogue type.

The optical device 41 is arranged to detect, during the transit of the container 1, a profile of the membrane 2, for example including a series of points of the surface of the membrane 2, with a predetermined sampling frequency of the readings performed. It is also provided that a respective sensor is provided for each row of containers 1.

In another embodiment, it may be provided that the optical device comprises a video camera or a camera configured to detect the membrane profile 2 through the analysis of images acquired by the optical device 41.

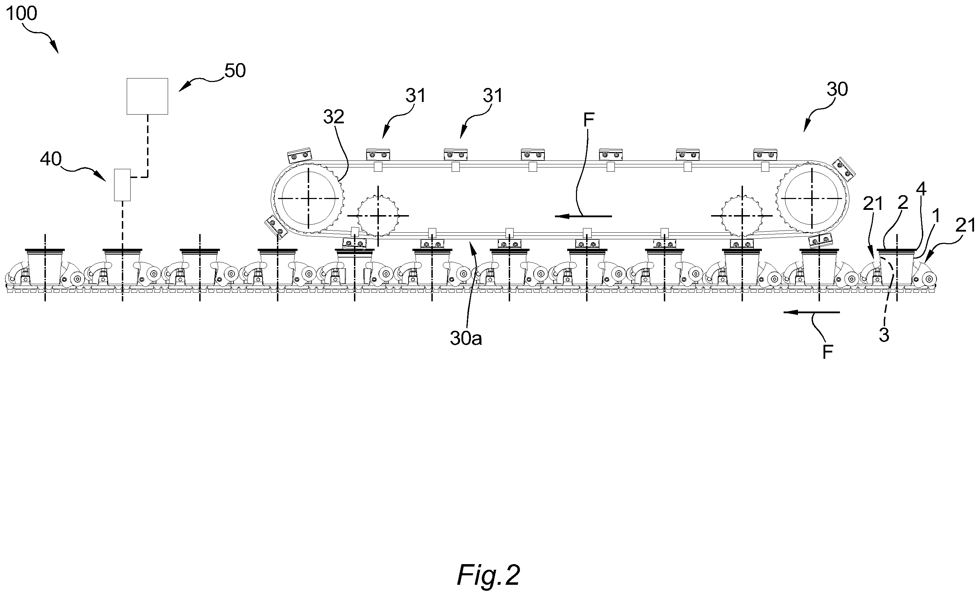

The apparatus 100 further comprises a control unit 50, schematically represented in Figure 2, configured to compare the parameter related to a membrane profile 2 with a predefined threshold, to verify whether the tightness of the container is to be classified as defective.

## Claims

1. Apparatus for testing the tightness of containers (1) closed by respective membranes (2), comprising:
- a deforming unit (15) configured to exert a deforming action on a plurality of said containers (1), and
- a detection unit (40) for detecting the deformation of the membrane (2) of each container (1) submitted to the deforming action,
wherein said deforming unit (15) comprises a plurality of deforming devices (20), **characterized in that** each deforming device (20) is configured to be individually associated with a single and respective container (1) of said plurality of containers to exert said deforming action, each deforming device (20) comprising a pair of pressing elements (21) between which the respective container (1) is to be positioned.

2. Apparatus according to claim 1, further comprising a transport device (10) for transporting said plurality of containers (1) towards said detection unit (40), wherein said plurality of deforming devices (20) is mounted on the transport device (10).

3. Apparatus according to claim 1 or 2, wherein said pressing elements (21) are mounted in an articulated way on respective supports (22) to be submitted to a displacement movement from and to an operating position in which they exert the action of deforming the corresponding container (1).

4. Apparatus according to claim 3, wherein the displacement movement of said pressing elements (21) from and to said operating position is an oscillation.

5. Apparatus according to claim 3 or 4, comprising a device (25) for controlling the displacement movement of each pressing element (21), said control device comprising a cam mechanism including a respective cam-follower element (26) rotatably supported on each pressing element (21) and superficially coupled with a cam profile (27) common to the plurality of the deforming devices (20).

6. Apparatus according to claim 5, wherein the cam profile (27) is mounted on a stationary frame (28) supporting the transport device (10).

7. Apparatus according to claim 5 or 6, comprising a pair of cam profiles (27), respectively arranged at laterally opposite sides of the transport device (10) with respect to a longitudinal extension direction of the transport device (10).

8. Apparatus according to one of claims 3 to 7, wherein the pressing element (21) comprises a surface (21a) having a concave profile intended to contact superficially the container (1).

9. Apparatus according to one or more of the preceding claims, wherein said deforming devices (20) are configured to exert the deforming action on the respective containers (1) associated therewith while said containers (1) are handled along a handling path.

10. Apparatus according to one or more of claims 3 to 9, wherein each pressing element (21) of the pair of pressing elements associated with the respective container (1) is configured to exert a deforming action including a respective squeezing, the two squeezing actions exerted by the pair of pressing elements (21) being performed on the container, in a substantially simultaneous manner, on respective diametrically opposite sides of said container (1).

11. Method for testing the tightness of containers (1) closed by respective membranes (2), comprising the steps of:
providing a deforming unit (15) including a plurality of deforming devices (20) configured to exert a deforming action on a respective plurality of said containers (1),
setting up a detection unit (40) for detecting the deformation of the membrane (2) of each container (1) submitted to the deforming action,
individually associating each deforming device (20) with a single, respective container (1) of said plurality of containers to exert said deforming action, each deforming device (20) comprising a pair of pressing elements (21) between which the respective container (1) is positioned,
detecting the deformation of the membrane (2) of each container (1) submitted to the deforming action to test the tightness of the container (1).

## Patentansprüche

1. Vorrichtung zum Prüfen der Dichtheit von Behältern (1), die durch entsprechende Membranen (2) verschlossen sind, umfassend:
- eine Verformungseinheit (15), die eingerichtet ist, um eine Verformungswirkung auf eine Mehrzahl der Behälter (1) auszuüben, und
- eine Erfassungseinheit (40) zum Erfassen der Verformung der Membran (2) jedes Behälters (1), der der Verformungswirkung ausgesetzt ist,
- wobei die Verformungseinheit (15) eine Mehrzahl von Verformungsvorrichtungen (20) aufweist,
- **dadurch gekennzeichnet, dass** jede Verformungsvorrichtung (20) eingerichtet ist, um einzeln mit einem einzelnen und entsprechenden Behälter (1) der Mehrzahl von Behältern verbunden zu sein, um die Verformungswirkung auszuüben, wobei jede Verformungsvorrichtung (20) ein Paar von Andrückelementen (21) aufweist, zwischen denen der jeweilige Behälter (1) zu positionieren ist.

2. Vorrichtung nach Anspruch 1, die ferner eine Transportvorrichtung (10) zum Transportieren der Mehrzahl von Behältern (1) zur Erfassungseinheit (40) aufweist, wobei die Mehrzahl von Verformungsvorrichtungen (20) an der Transportvorrichtung (10) montiert ist.

3. Vorrichtung nach Anspruch 1 oder 2, wobei die Andrückelemente (21) gelenkig auf jeweiligen Trägern (22) montiert sind, um einer Verschiebungsbewegung von und zu einer Betriebsposition ausgesetzt zu sein, in der sie die Verformungswirkung auf den entsprechenden Behälter (1) ausüben.

4. Vorrichtung nach Anspruch 3, wobei die Verschiebungsbewegung der Andrückelemente (21) von und zur Betriebsposition eine Schwingung ist.

5. Vorrichtung nach Anspruch 3 oder 4, die eine Vorrichtung (25) zur Steuerung der Verschiebungsbewegung jedes Andrückelements (21) aufweist, wobei die Steuervorrichtung einen Nockenmechanismus mit einem entsprechenden Nockenstösselelement (26) aufweist, das drehbar auf jedem Andrückelement (21) gelagert und oberflächlich mit einem Nockenprofil (27) verbunden ist, das der Mehrzahl der Verformungsvorrichtungen (20) gemeinsam ist.

6. Vorrichtung nach Anspruch 5, wobei das Nockenprofil (27) auf einem stationären Rahmen (28) montiert ist, der die Transportvorrichtung (10) trägt.

7. Vorrichtung nach Anspruch 5 oder 6, die ein Paar von Nockenprofilen (27) aufweist, die jeweils an seitlich gegenüberliegenden Seiten der Transportvorrichtung (10) in Bezug auf eine Längserstreckungsrichtung der Transportvorrichtung (10) angeordnet sind.

8. Vorrichtung nach einem der Ansprüche 3 bis 7, wobei das Andrückelement (21) eine Oberfläche (21a) mit einem konkaven Profil aufweist, die bestimmt ist, um den Behälter (1) oberflächlich zu berühren.

9. Vorrichtung nach einem oder mehreren der vorhergehenden Ansprüche, wobei die Verformungsvorrichtungen (20) eingerichtet sind, um die Verformungswirkung auf die jeweiligen damit verbundenen Behälter (1) auszuüben, während die Behälter (1) entlang eines Transportweges transportiert werden.

10. Vorrichtung nach einem oder mehreren der Ansprüche 3 bis 9, wobei jedes Andrückelement (21) des dem jeweiligen Behälter (1) zugeordneten Paars von Andrückelementen eingerichtet ist, um eine Verformungswirkung einschließlich eines jeweiligen Quetschens auszuüben, wobei die beiden durch das Paar von Andrückelementen (21) ausgeübten Quetschwirkungen im Wesentlichen gleichzeitig auf den Behälter auf jeweils diametral gegenüberliegenden Seiten des Behälters (1) ausgeführt werden.

11. Verfahren zum Prüfen der Dichtheit von Behältern (1), die durch entsprechende Membranen (2) verschlossen sind, das die Schritte aufweist:
- Vorsehen einer Verformungseinheit (15) mit einer Mehrzahl von Verformungsvorrichtungen (20), die eingerichtet sind, um eine Verformungswirkung auf eine jeweilige Mehrzahl der Behälter (1) auszuüben,
- Einrichten einer Erfassungseinheit (40) zum Erfassen der Verformung der Membran (2) jedes Behälters (1), der der Verformungswirkung ausgesetzt ist,
- Einzelnes Zuordnen jeder Verformungsvorrichtung (20) zu einem einzelnen jeweiligen Behälter (1) der Mehrzahl der Behälter, um die Verformungswirkung auszuüben, wobei jede Verformungsvorrichtung (20) ein Paar von Andrückelementen (21) aufweist, zwischen denen der jeweilige Behälter (1) positioniert ist,
- Erfassen der Verformung der Membran (2) jedes Behälters (1), der der Verformungswirkung ausgesetzt ist, um die Dichtheit des Behälters (1) zu prüfen.

## Revendications

1. Appareil pour tester l'étanchéité de récipients (1) fermés par des membranes respectives (2), comprenant :
- une unité de déformation (15) configurée pour exercer une action de déformation sur une pluralité desdits récipients (1), et
- une unité de détection (40) pour détecter la déformation de la membrane (2) de chaque récipient (1) soumis à l'action de déformation,
dans lequel ladite unité de déformation (15) comprend une pluralité de dispositifs de déformation (20),
**caractérisé en ce que**
chaque dispositif de déformation (20) est configuré pour être associé individuellement à un récipient (1) unique et respectif de ladite pluralité de récipients pour exercer ladite action de déformation, chaque dispositif de déformation (20) comprenant une paire d'éléments de pression (21) entre lesquels le récipient (1) respectif doit être positionné.

2. Appareil selon la revendication 1, comprenant en outre un dispositif de transport (10) pour transporter ladite pluralité de récipients (1) vers ladite unité de détection (40), dans lequel ladite pluralité de dispositifs de déformation (20) est montée sur le dispositif de transport (10).

3. Appareil selon la revendication 1 ou 2, dans lequel lesdits éléments de pression (21) sont montés de manière articulée sur des supports (22) respectifs pour être soumis à un mouvement de déplacement depuis et vers une position de fonctionnement dans laquelle ils exercent l'action de déformer le récipient (1) correspondant.

4. Appareil selon la revendication 3, dans lequel le mouvement de déplacement desdits éléments de pression (21) depuis et vers ladite position de fonctionnement est une oscillation.

5. Appareil selon la revendication 3 ou 4, comprenant un dispositif (25) pour commander le mouvement de déplacement de chaque élément de pression (21), ledit dispositif de commande comprenant un mécanisme à came comprenant un élément suiveur de came (26) respectif supporté de manière rotative sur chaque élément de pression (21) et couplé en surface avec un profil de came (27) commun à la pluralité des dispositifs de déformation (20).

6. Appareil selon la revendication 5, dans lequel le profil de came (27) est monté sur un bâti fixe (28) supportant le dispositif de transport (10).

7. Appareil selon la revendication 5 ou 6, comprenant une paire de profils de came (27), respectivement disposés sur des côtés latéralement opposés du dispositif de transport (10) par rapport à une direction d'extension longitudinale du dispositif de transport (10).

8. Appareil selon l'une des revendications 3 à 7, dans lequel l'élément de pression (21) comprend une surface (21a) ayant un profil concave destiné à entrer en contact surfacique avec le récipient (1).

9. Appareil selon l'une ou plusieurs des revendications précédentes, dans lequel lesdits dispositifs de déformation (20) sont configurés pour exercer l'action de déformation sur les récipients (1) respectifs qui leur sont associés pendant que lesdits récipients (1) sont manipulés le long d'un chemin de manutention.

10. Appareil selon l'une ou plusieurs des revendications 3 à 9, dans lequel chaque élément de pression (21) de la paire d'éléments de pression associés au récipient (1) respectif est configuré pour exercer une action de déformation comprenant un écrasement respectif, les deux actions d'écrasement exercés par la paire d'éléments de pression (21) étant réalisés sur le récipient, de manière sensiblement simultanée, sur des côtés respectifs diamétralement opposés dudit récipient (1).

11. Procédé pour tester l'étanchéité de récipients (1) fermés par des membranes (2) respectives, comprenant les étapes suivantes :
fournir une unité de déformation (15) comprenant une pluralité de dispositifs de déformation (20) configurés pour exercer une action de déformation sur une pluralité respective desdits récipients (1),
mettre en place une unité de détection (40) pour détecter la déformation de la membrane (2) de chaque récipient (1) soumis à l'action de déformation,
associer individuellement chaque dispositif de déformation (20) à un récipient (1) unique et respectif de ladite pluralité de récipients pour exercer ladite action de déformation, chaque dispositif de déformation (20) comprenant une paire d'éléments de pression (21) entre lesquels le récipient (1) respectif est positionné,
détecter la déformation de la membrane (2) de chaque récipient (1) soumis à l'action de déformation pour tester l'étanchéité du récipient (1).
